(19) Europäisches Patentamt
European Patent Office
Office européen des brevets

(11) **EP 3 905 582 A1**

(12) **EUROPEAN PATENT APPLICATION**
published in accordance with Art. 153(4) EPC

(43) Date of publication:
**03.11.2021 Bulletin 2021/44**

(21) Application number: **19902340.9**

(22) Date of filing: **27.12.2019**

(51) Int Cl.:
*H04L 5/02* (2006.01)     *H04B 3/32* (2006.01)

(86) International application number:
**PCT/CN2019/129058**

(87) International publication number:
**WO 2020/135685 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018 CN 201811616133**

(71) Applicant: **ZTE Corporation**
**Shenzhen, Guangdong 518057 (CN)**

(72) Inventor: **DU, Jian**
**Shenzhen, Guangdong 518057 (CN)**

(74) Representative: **Studio Torta S.p.A.**
**Via Viotti, 9**
**10121 Torino (IT)**

(54) **BANDWIDTH BEARING METHOD AND DEVICE, STORAGE MEDIUM AND ELECTRONIC DEVICE**

(57) Provided in the present document is a bandwidth bearing method and device, a storage medium and an electronic device, the bandwidth bearing method comprising: acquiring the maximum bandwidth allocated for a current line; according to the maximum bandwidth, determining the number of data symbols required by the current line and the number of silent symbols of the current line; and bearing the maximum bandwidth by means of the determined number of data symbols required by the current line.

```
┌─────────────────────────────────────────────────────────┐
│                                                           │
│   Acquire a maximum bandwidth allocated for a current line│  ⟋ S202
│                                                           │
└─────────────────────────────────────────────────────────┘
                            │
                            ▼
┌─────────────────────────────────────────────────────────┐
│   Determine a number of data symbols required by the      │
│   current line and a number of quiet symbols of the       │  ⟋ S204
│   current line according to the maximum bandwidth         │
└─────────────────────────────────────────────────────────┘
                            │
                            ▼
┌─────────────────────────────────────────────────────────┐
│   Bear the maximum bandwidth by the determined number of  │
│   data symbols required by the current line               │  ⟋ S206
└─────────────────────────────────────────────────────────┘
```

Figure 2

# EP 3 905 582 A1

**Description**

## Cross-reference to Related Applications

This application claims the priority of Chinese patent application CN 201811616133.6 filed with the China National Intellectual Property Administration on December 28, 2018, the entirety of which is incorporated herein by reference.

## Field of the Invention

The present disclosure relates to the field of communications, and in particular, to a bandwidth bearing method and device, a storage medium, and an electronic device.

## Background of the Invention

With rapid development of science and technology, data traffic usage has been growing in recent years. In the access technology based on copper twisted pair, the conventional Asymmetric Digital Subscriber Line (ADSL), Very High Speed Digital Subscriber Line (VDSL), etc. can no longer meet requirements of users for bandwidth, and Fast Access to Subscriber Terminals (FAST) access technology (commonly known as G.FAST) has been designed accordingly. G.FAST access technology can provide two-way bandwidth close to one gigabit per second (Gbps) (by using 106 megahertz (MHz) of spectrum) in both short and medium distances (the longest access distance is 400 meters), which may provide a higher access bandwidth than traditional copper Cable twisted pair DSL access technology.

When providing users with broadband access services, in order to rank users and provide them with differentiated services, from the perspective of subsequent business planning, operators will generally not provide all the maximum bandwidths that can be achieved over the current line (hereinafter referred to as the "attainable bandwidth") to users, but allocates a maximum available bandwidth to the users. Such a maximum available bandwidth may be adjusted down to a certain extent based on the available bandwidth for the current line. Consequently, "rate limiting" may be performed.

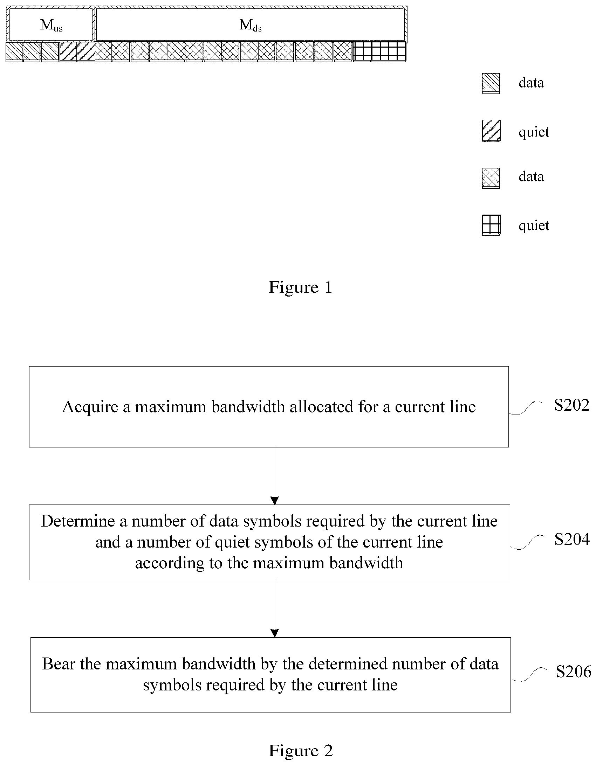

The G.FAST technology is a technology that adopts time-division duplexing (TDD). Briefly, it defines a certain length of time slice as a symbol, and based on classification of information carried by such a symbol, the symbol may be categorized as data symbol, quiet symbol, or the like. Among them, the quiet symbol does not carry data, and its transmission power is zero. During the time interval when a quiet symbol is transmitted, a transmitter at the transmitting end and a receiver at the receiving end may be switched off to reduce energy consumption. The data symbol needs to carry data, and its transmission power is not zero, in which case the transmitter and the receiver must remain switched on. Based on classification of directions, the symbol may be categorized as uplink (user side to network side) symbol or downlink (network side to user side) symbol. The uplink symbol and downlink symbol carry the user's uplink data (such as uploading to the network disk) and downlink data (such as downloading movie files) respectively. Such symbols may also be composed of the various symbols mentioned above. A TDD frame is composed of Mds downlink symbols, $M_{us}$ uplink symbols, and transmission gaps. The TDD frame is a basic unit for G.FAST data transmission. The composition of a typical TDD frame is shown in Fig. 1 (the transmission gap is ignored).

A current approach for implementation of a G.FAST line restricting a maximum bandwidth allocated for users is generally implemented by restricting the upper limit of the amount of data carried on data symbols. That is, the data symbols may carry a certain maximum amount M of data, but the upper limit N may be restricted to be less than the maximum amount M that the data symbols can carry, when assigning the upper limit N of the amount of data that can be carried. Usually, during the implementation of such an approach, the transmission power of the data symbols corresponding to the upper limit N is slightly less than the transmission power corresponding to the upper limit M, but those data symbols are still to be used. The physical layer of the chip is to keep the transmitter and the receiver in an open state. Therefore, little effect on saving energy consumption will be achieved.

Among related technologies, in a scenario where users are allocated a maximum allocated bandwidth lower than the available bandwidth, the transmitter and the receiver still have relatively high energy consumption, resulting in problems such as energy waste.

## Summary of the Invention

Embodiments of the present disclosure provide a bandwidth bearing method and device, a storage medium, and an electronic device, to at least solve the problems associated with the prior art that in a scenario where users are allocated a maximum allocated bandwidth lower than the available bandwidth, the transmitter and the receiver still have relatively high energy consumption, resulting in a waste of energy.

According to an embodiment of the present disclosure, it is provided a bandwidth bearing method, including:

acquiring a maximum bandwidth allocated for a current line; determining a number of data symbols required by the current line and a number of quiet symbols of the current line according to the maximum bandwidth; and bearing the maximum bandwidth by the determined number of data symbols required by the current line.

According to a further embodiment of the present disclosure, it is also provided a bandwidth bearing device, including: an acquisition module configured to acquire a maximum bandwidth allocated for a current line; a determination module configured to determine a number of data symbols required by the current line and a number of quiet symbols of the current line according to the maximum bandwidth; and a bearing module configured to bear the maximum bandwidth by the determined number of data symbols required by the current line.

According to a still further embodiment of the present disclosure, it is also provided a storage medium storing thereon a computer program, which is configured, when executed, to implement the bandwidth bearing method described above.

According to a yet further embodiment of the present disclosure, it is also provided an electronic device including a memory and a processor. The memory may store thereon a computer program, and the processor is configured to execute the computer program to implement the bandwidth bearing method described above.

**Brief Description of the Drawings**

Fig. 1 is a schematic diagram illustrating a TDD frame and various symbols in G.FAST in the related art;

Fig. 2 is a flowchart illustrating a bandwidth bearing method according to an embodiment of the present disclosure;

Fig. 3 is a structural block diagram illustrating a bandwidth bearing device according to an embodiment of the present disclosure;

Fig. 4 is a schematic diagram illustrating an implementation of a G.FAST line restricting a maximum bandwidth allocated for users in the related art; and

Fig. 5 is a schematic flowchart illustrating a bandwidth bearing method applied according to an alternative embodiment of the present disclosure.

**Detailed Description of the Embodiments**

The present disclosure will be described below in detail with reference to the drawings and in conjunction with the embodiments. It should be noted that embodiments of the present application and features in the embodiments may be combined with each other as long as there is no conflict.

It should be noted that the terms "first", "second" and so on in the description and claims of the present disclosure and the drawings are used to distinguish similar objects, and are not necessarily used to describe a specific sequence or order.

Embodiment One

An embodiment of the present disclosure provides a bandwidth bearing method. Fig. 2 is a flowchart illustrating a bandwidth bearing method according to an embodiment of the present disclosure. As shown in Fig. 2, the bandwidth bearing method includes the following steps.

At step S202, a maximum bandwidth allocated for a current line is acquired.

At step S204, a number of data symbols required by the current line and a number of quiet symbols of the current line are determined according to the maximum bandwidth.

At step S206, the maximum bandwidth is borne by the determined number of data symbols required by the current line.

Through the above three steps, the number of data symbols required by the current line and the number of quiet symbols required by the current line may be determined according to the acquired maximum bandwidth; and the maximum bandwidth may be borne by the determined number of data symbols required by the current line. In this way, the number of data symbols to bear the bandwidth can be minimized, thereby saving energy consumption. It can solve the problems associated with the prior art that in a scenario where users are allocated a maximum allocated bandwidth lower than the available bandwidth, the transmitter and the receiver still have relatively high energy consumption, resulting in a waste of energy. This in turn ensures maximum reduction in energy consumption.

In the embodiment of the present disclosure, the step of determining a number of data symbols required by the current line and a number of quiet symbols of the current line according to the maximum bandwidth may be implemented in such a way that an average attainable bandwidth for each data symbol of the current line is acquired; and the number of data symbols required by the current line and the number of quiet symbols of the current line are determined according to the average attainable bandwidth and the maximum bandwidth. The step of acquiring an average attainable bandwidth for each data symbol of the current line may be implemented in such a way that an available bandwidth for the current line and the number of data symbols allocated for the current line are acquired; and a result calculated by dividing the attainable bandwidths by the number of data symbols is used as the average attainable bandwidth.

In the embodiment of the present disclosure, the step of acquiring the number of data symbols allocated for the current line may be implemented in such a way that a logical frame configuration of the current line is acquired; and the number of data symbols allocated for the current line is acquirable according to the logical frame configuration. In other words, the number of data symbols allocated for the current line can be obtained only from the logical frame configuration.

In the embodiment of the present disclosure, the current line includes a current line in an uplink direction and/or a current line in a downlink direction.

In the embodiment of the present disclosure, the method may further include switching off a transmitter and a receiver in each of time slots for the determined number of quiet symbols of the current line. The transmitter is positioned at a transmitting end of the current line, and the receiver is positioned at a receiving end of the current line.

Hereinafter, the mentioned bandwidth bearing method will be described from another aspect by using a G.FAST system as an example. In the process of the method, an instruction is received to restrict a maximum allocated bandwidth for a user, and the number of data symbols and the number of quiet symbols over the current line are determined according to the instruction, where the data symbols may be modulated at least to carry data corresponding to the maximum allocated bandwidth for the user, and the number of quiet symbols is greater than or equal to one.

The step of receiving the instruction to restrict the maximum allocated bandwidth for the user may be implemented as receiving, by a G.FAST line, an operation of restricting the maximum allocated bandwidth for the user that is issued by an operator via a human-machine interface.

The determination of the number of data symbols and the number of quiet symbols over the current line according to this instruction may be implemented by calculation from the maximum allocated bandwidth for the user. Accordingly, a maximum number of data symbols required by the current line to bear the maximum allocated bandwidth may be derived and then the number of quiet symbols that is available over the current line may also be derived. By allocating quiet symbols, the G.FAST line can switch off the transmitter at the transmitting end and the receiver at the receiving end in the time slot of each of the quiet symbols, thereby achieving a sufficient energy saving effect.

In some embodiments, the calculation of data symbols and quiet symbols may be implemented in such a way that an attainable bandwidth, i.e. a maximum bandwidth for the current line is determined; an average attainable bandwidth that each data symbol can bear is determined; and the number of data symbols used and the number of quiet symbols used over the current line are calculated according to the maximum bandwidth allocated for the user.

In summary, according to the foregoing solutions provided by the embodiments of the present disclosure, in an actual scenario where the maximum allocated bandwidth for users is generally less than the available bandwidth, operators and users will each achieve a reduction in energy consumption. It is possible to increase the economic efficiency and therefore promote ideas of eco-friendly ways of life.

Hereinafter, the mentioned bandwidth bearing method is further illustrated by another example, but is not intended to limit the solutions provided by the embodiments of the present disclosure. The steps of the method will now be exemplified.

At step S101, an available bandwidth for the current line is determined.

At step S102, an average attainable bandwidth that can be modulated and borne by each data symbol is determined according to the available bandwidth for the current line and the allocation of uplink and downlink timeslots over the current line.

At step S103, the number of data symbols used and the number of quiet symbols used over the current line are calculated according to the maximum bandwidth allocated by the operator to the user and the average attainable bandwidth that can be modulated and borne by each data symbol.

The implementation of each of the above steps will now be described in details.

In step S101, the attainable bandwidth in this embodiment refers to the available bandwidth calculated from physical condition(s) of the current line, and such a bandwidth refers to the maximum bandwidth that can be achieved under the limitation of cable condition(s) and noise environment in the related art. Thus, this bandwidth is associated with physical parameters of cables (such as length, wire diameter, etc.), and noise environments of lines (including external radio interference, board background noise, and preset signal-to-noise ratio margin, etc.).

The attainable bandwidth in this embodiment is independent from the maximum bandwidth allocated by the operator to the user, and is also independent from the number of data symbols used over the line. In related implementation technologies, the maximum bandwidth allocated by the operator to the user ultimately affects or determines the actual allocated bandwidth for the line, rather than the attainable bandwidth. Similarly, the number of data symbols used over the line also determines the actual allocated bandwidth for the line.

The purpose of acquiring the available bandwidth in this embodiment is to acquire the maximum bandwidth that can be used by the line under current physical conditions of the current line. Such a bandwidth is based on the fact that all symbols of the current line are data symbols, and a number of bits that can be carried on a data symbol will be obtained without being restricted by other human factors.

This may be accomplished by choosing any of the following methods.

First Method

At step S201, a logical frame configuration of the current line is acquired and stored.

At step S203, the logical frame configuration is set up to use data symbols for all symbols.

At step S205, an attainable net data rate (ATTNDR) of the current line is calculated according to physical information of the current line, and the ATTNDR is taken as the attainable bandwidth for the current line; namely, $B_{att}$ =ATTNDR.

At step S207, the logical frame configuration is restored to an initial logical frame configuration of the current line.

The attainable bandwidth in this embodiment directly uses the physical quantity ATTNDR in the G.9701 standard as the attainable bandwidth.

According to the standard, the attainable bandwidth is calculated with the following formula:

$$\text{ATTNDR}=\sum_{i=0}^{MSI}\min\left\{round\left[\log_2\left(1+10^{(SNR(i+\Delta f\text{-}SNRGAP\text{-}TARSNRM)/10)}\right)\right],15\right\}\times 4kbit/s$$

SNR indicates signal-to-noise ratio for each sub-carrier, which comprehensively reflects the physical conditions of the line and the peripheral noise.

SNRGAP is a constant.

TARSNRM indicates target SNR margin, which is generally specified by the operator.

All the information may be basic information that characterizes the line status and can be easily obtained.

Second Method

At step S301, a logical frame configuration of the current line is acquired and stored.

At step S302, the logical frame configuration is provided to use data symbols for all symbols.

At step S303, a maximum net data rate (MAXNDR) of the current line is acquired and stored.

At step S304, the MAXNDR of the current line is set as the upper limit of the maximum value specified by the standard.

At step S305, the line is forced to perform link reestablishment.

At step S306, an actual link establishment rate Bact of the current line is taken as the attainable bandwidth; namely, $B_{att}=B_{act}$.

At step S307, the logical frame configuration is restored to an initial logical frame configuration of the current line.

At step S308, the MAXNDR of the current line is restored to an initial MAXNDR.

The MAXNDR in this embodiment is the maximum allocated bandwidth for the user attained by the line in an existing way. Additionally, the MAXNDR will not change the usage distribution of data symbols and quiet symbols, but only the number of bits carried on the data symbols.

The attainable bandwidth in this embodiment directly adopts the actual link establishment rate of the line under current physical conditions as the attainable bandwidth. Because the actual bandwidth is used as the attainable bandwidth, it is necessary to remove the influencing factors that would affect the actual bandwidth. Herein, the factors mainly involve distribution of the MAXNDR and current data symbols and quiet symbols.

Third Method

At step S401, a dual ended line testing (DELT) of the line is initiated once.

At step S403, it is determined that current DELT is a successful test.

At step S403, a line rate $B_{delt}$ of the DELT of the current line is acquired as the attainable bandwidth; namely, $B_{att}=B_{delt}$.

DELT in this embodiment is a line diagnostic testing method in DSL access technology. This method requires a connection between a central office (Distribution Point Units, DPU) and a terminal (G.FAST MODEM (Modulator-Demodulator)). By operation of this line testing method, a series of parameters including line rate may be acquired as a testing result. In engineering industry, before a user subscribes to services, the DELT may be used to test the current line and cable, which allows a survey on the physical conditions of the cable.

For the attainable bandwidth in this embodiment, the testing result of the DELT is used as the basis for calculating the attainable bandwidth.

In step S102, the average attainable bandwidth borne by each data symbol in this embodiment means that if the current line needs to bear a physical bandwidth up to the attainable bandwidth macroscopically, at the data symbol level, the bandwidth is then allocated averagely for each of the data symbols.

In this embodiment, the purpose of determining the average attainable bandwidth borne by each data symbol is to determine the bearing capacity of each data symbol. The capacity of the bandwidth that can be borne by each data symbol may be consistent in a single direction (uplink or downlink), and may generally be inconsistent, but may possibly be consistent, in different directions.

This may be accomplished by choosing the following steps.

At step S601, an attainable bandwidth for the line is acquired according to S 101.

At step S602, a maximum number of symbols used in a corresponding direction of the current line are acquired.

At step S603, an average attainable bandwidth borne by each data symbol is calculated.

In an embodiment, the average available bandwidth for each data symbol may be calculated with the following formula:

$$B_{avg} = ceil(B_{att}/M).$$

In this embodiment, M is the maximum number of symbols used in the corresponding direction; the downlink corresponds to $M_{ds}$, and the uplink corresponds to $M_{us}$.

Step S103 may be further implemented by the following steps.

At step S701, it is determined whether the current line is in a state of link establishment.

At step S702, the current line is not in the state of link establishment, the maximum downlink allocated bandwidth MAXNDRds and the maximum uplink allocated bandwidth $MAXNDR_{us}$ allocated by the operator to the user are then recorded, to wait for beginning of link establishment.

At step S703, the current line is in the state of link establishment, a downlink attainable bandwidth $B_{att\_ds}$ of the line is calculated according to S101, and an average downlink data symbol bearing bandwidth $B_{avg—ds}$ is calculated according to S102, so as to calculate a theoretical upper limit $Tbudget_{dsmax}$ of each data symbol.

$$Tbudget_{dsmax} = Ceil(MAXNDR_{ds}/B_{avg\_ds}).$$

Based on $Q_{ds} = M_{ds}$ - $Tbudget_{dsmax}$, the number of quiet symbols is calculated.

$Q_{ds}$ indicates the number of symbols that can switch off the transmitter in the downlink direction, multiplied by the transmission power of each downlink symbol, i.e., the power associated with reducible energy consumption in the downlink direction.

At step S704, an uplink attainable bandwidth $B_{att\_us}$ of the line is calculated according to S101, and then an average uplink data symbol bearing bandwidth $B_{avg—us}$ is calculate according to S102, so as to calculate a theoretical upper limit $Tbudget_{usmax}$ of each data symbol.

$$Tbudget_{usmax} = Ceil(MAXNDR_{us}/B_{avg\_us}).$$

Based on $Q_{us} = M_{us} - Tbudget_{usmax}$, the number of quiet symbols is calculated.

$Q_{ds}$ is the number of symbols that can switch off the transmitter in the downlink direction, multiplied by the transmission power of each downlink symbol, i.e., the power associated with reducible energy consumption in the downlink direction.

In this embodiment, Mds and $M_{us}$ indicate the numbers of symbols allocated to downlink and uplink in the TDD frame, respectively, and satisfy the following relationship, where $M_f$ indicates the total number of symbols in the TDD frame.

$$M_{ds} + M_{us} + 1 = M_f.$$

It should be noted that the different implementation methods provided by each of the above steps S101, S102, and S103 can be freely combined to form different embodiments.

Throughout the description of the above embodiments, those skilled in the art may be clearly aware that the methods according to the above embodiments can be implemented by means of software plus necessary general hardware platforms, and of course may also be implemented by hardware, but in many cases the former is optional. Based on such understanding, the solutions of the present disclosure essentially or the part thereof that contributes to related technologies can be embodied in the form of a software product. The computer software product is stored in a storage medium (such as a read-only memory (ROM)/random access memory (RAM), a magnetic disk, an optical disk), and includes a plurality of instructions to cause a terminal device (which may be a mobile phone, a computer, a server, or a network device, etc.) to execute the method described in each of the embodiments of the present disclosure.

Embodiment Two

In this embodiment, a bandwidth bearing device is provided, which may be used to implement the described embodiments and preferred implementations, and those having been described will not be repeated. As used below, the term "module" can implement a combination of at least one of software and hardware with predetermined functions. Although the devices described in the following embodiments are preferably implemented by software, implementation by hardware or a combination of software and hardware is also possible and contemplated.

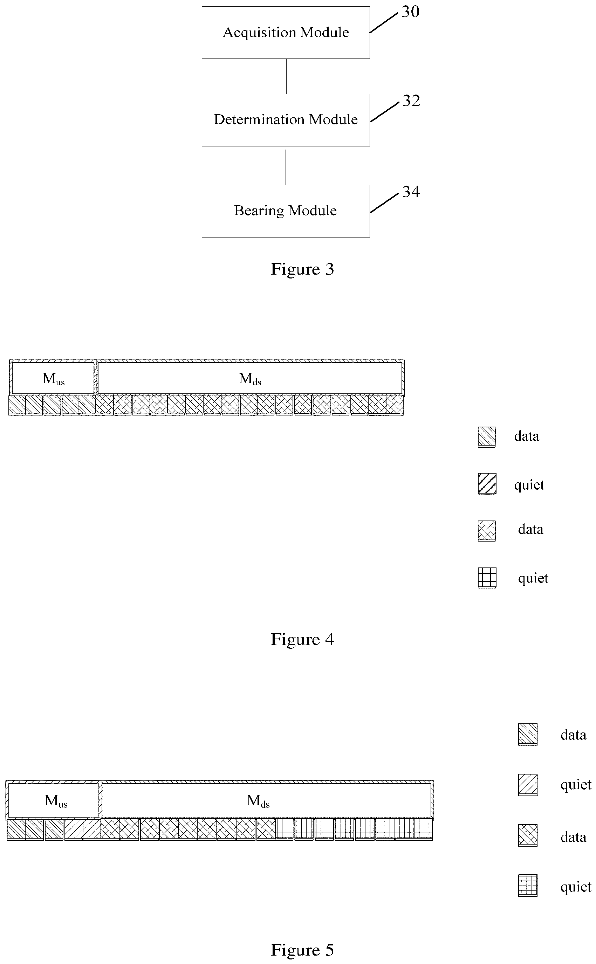

Fig. 3 is a structural block diagram illustrating a bandwidth bearing device according to an embodiment of the present disclosure. As shown in FIG. 3, the device includes an acquisition module 30, a determination module 32, and a bearing module 34.

The acquisition module 30 is configured to acquire a maximum bandwidth allocated for a current line.

The determination module 32 is configured to determine a number of data symbols required by the current line and a number of quiet symbols of the current line according to the maximum bandwidth.

The bearing module 34 is configured to bear the maximum bandwidth by the determined number of data symbols required by the current line.

Through the foregoing solutions, the number of data symbols required by the current line and the number of quiet symbols required by the current line may be determined according to the acquired maximum bandwidth; and the maximum bandwidth may be borne by the determined number of data symbols. In this way, the number of data symbols to bear the bandwidth can be minimized, thereby saving energy consumption. It can solve the problems associated with the prior art that in a scenario where users are allocated a maximum allocated bandwidth lower than the available bandwidth, the transmitter and the receiver still have relatively high energy consumption, resulting in a waste of energy. This in turn ensures maximum reduction in energy consumption.

In the embodiment of the present disclosure, the determination module 32 is further configured to acquire an average attainable bandwidth for each data symbol of the current line 32, and to determine the number of data symbols required by the current line and the number of quiet symbols of the current line according to the average attainable bandwidth and the maximum bandwidth.

In an embodiment, the determination module 32 is further configured to acquire an available bandwidth for the current line and the number of data symbols allocated for the current line 32, and to use a result calculated by dividing the attainable bandwidths by the number of data symbols as the average attainable bandwidth.

In an embodiment, the determination module 32 is further configured to acquire a logical frame configuration of the current line 32, and to acquire the number of data symbols allocated for the current line according to the logical frame configuration.

In the embodiment of the present disclosure, the current line includes a current line in an uplink direction and/or a current line in a downlink direction.

In the embodiment of the present disclosure, the bandwidth bearing device may further include a switch module.

The switch module is configured to switch off a transmitter and a receiver in each of the time slots for the determined number of the quiet symbols of the current line. The transmitter is positioned at a transmitting end of the current line, and the receiver is positioned at a receiving end of the current line.

It should be noted that the solutions of Embodiment One to Embodiment Two described above can be implemented in combination or separately, which is not limited by the embodiments of the present disclosure.

The foregoing solutions will now be described in conjunction with alternative embodiments, but they are not intended to limit the solutions provided by the embodiments of the present disclosure.

Alternative Embodiment One

There is currently a G.FAST line, and a maximum bandwidth allocated by the operator to a user may be given as downlink $MAXNDR_{ds}$=425 Mbps, and uplink $MAXNDR_{us}$=125 Mbps (megabits per second). The TDD frame is configured such that the maximum number of data symbols that can be used in the downlink is $M_{ds}=17$, and the maximum number of data symbols that can be used in the uplink is $M_{us}=5$.

According to an implementation of the existing solutions, all the uplink and downlink data symbols in the TDD frame will be used to transmit data. As shown in Fig. 4, 17 data symbols are used in the downlink and 5 data symbols are used in the uplink. Accordingly, the bandwidth actually borne by each data symbol in the downlink is 25 M, and the bandwidth actually borne by each data symbol in the uplink is 25 M.

The following steps may be implemented according to the foregoing solutions provided by the alternative embodiments of the present disclosure.

Firstly, the logical frame configuration of the current line is acquired and stored. At this time, the number of downlink data symbols is $M_{ds\_datasymbol}=M_{ds}=17$, and the number of uplink data symbols is $M_{us\_datasymbol}=M_{us}=5$.

Secondly, when the current configuration uses data symbols for all symbols, skip this step.

Again, the maximum bandwidth allocated by the operator to the user is record as $MAXNDR_{ds}=425$ Mbps or $MAXNDR_{us}=125$ Mbps.

Then, the maximum bandwidth actually allocated for the user over the current line is set to the maximum value supported by the standard.

Once again, upon link reestablishment, the actual link establishment rate of the current line is $Rate_{DS}=850$ Mbps, and Rateus=250 Mbps, where $ATTB_{Wds}=Rate_{DS}=850$ Mbps, and $ATTBw_{us}=Rate_{US}=250$ Mbps.

Then, the average attainable bandwidth for each data symbol is calculated as:

$$B_{ds}=ceil(ATTBw_{ds}/M_{ds})=850/17=50 \text{ Mbps};$$

$$B_{us}=ceil(ATTBw_{us}/M_{us})=250/5=50 \text{ Mbps}.$$

Again, the theoretical upper limit for each data symbol is calculated as:

$$Tbudget_{usmax}=Ceil(MAXNDR_{us}/B_{us})=ceil(125/50)=3;$$

$$Tbudget_{dsmax}=Ceil(MAXNDR_{ds}/B_{ds})=ceil(425/50)=9.$$

Then, the logical frame configuration is restored to the initial logical frame configuration of the current line. When the initial configuration uses data symbols for all symbols, skip this step.

Subsequently, the MAXNDR of the current line is restored to the initial MAXNDR, namely, $MAXNDR_{ds}=425$ Mbps, and $MAXNDR_{us}=125$ Mbps.

As shown in Figure 5, only 3 symbols are used for the uplink, 9 symbols for the downlink, thereby bearing a bandwidth for 425 Mbps in the downlink and 125 Mbps in the uplink, which can in turn achieve the bearing capacity equivalent to the existing technologies. The remaining symbols act as quiet symbols, to achieve energy saving. Upon practical measurement, on the DPU device, the power of each data symbol is about 0.015 watts. A 16-wire G.FAST local end design can save about 3 watts of power. This validates practical significance for DPU devices that are difficult to acquire power and often need to acquire power from user equipment.

## Alternative Embodiment Two

There is currently a G.FAST line, and a maximum bandwidth allocated by the previous operator to the user may be given as downlink $MAXNDR_{ds\_prev}=300$ Mbps, and uplink $MAXNDR_{us\_prev}=100$ Mbps. The user purchases value-added services and obtains increased uplink and downlink bandwidths. At this time, the maximum bandwidth allocated by the operator to the user may be given as downlink MAXNDRds=425 Mbps, and uplink $MAXNDR_{us}=125$ Mbps. The TDD frame is configured such that the maximum number of data symbols that can be used in the downlink is Mds=17, and the maximum number of data symbols that can be used in the uplink is $M_{us}=5$.

According to an implementation of the existing solutions, all the uplink and downlink data symbols in the TDD frame will be used to transmit data. As shown in Fig. 4, 17 data symbols are used in the downlink and 5 data symbols are used in the uplink. Accordingly, the bandwidth actually borne by each data symbol in the downlink is 17 M, and the bandwidth actually borne by each data symbol in the uplink is 20 M.

The following steps may be implemented according to the foregoing solutions provided by the alternative embodiments of the present disclosure.

Firstly, the logical frame configuration of the current line is acquired and stored. At this time, the number of downlink data symbols is $M_{ds\_datasymbol}=M_{ds}=17$, and the number of uplink data symbols is $M_{us\_datasymbol}=M_{us}=5$.

Secondly, when the current configuration uses data symbols for all symbols, skip this step.

Again, the maximum bandwidth allocated by the operator to the user is record as $MAXNDR_{ds}=425$ Mbps or $MAXNDR_{us}=125$ Mbps.

Then, the maximum bandwidth actually allocated for the user over the current line is set to the maximum value supported by the standard.

Once again, upon link reestablishment, the actual link establishment rate of the current line is $Rate_{DS}=850$ Mbps, and $Rate_{US}=250$ Mbps, where $ATTB_{Wds}=Rate_{DS}=850$ Mbps, and $ATTBw_{us}=Rate_{US}=250$ Mbps.

Then, the average attainable bandwidth for each data symbol is calculated as:

$$B_{ds}=ceil(ATTBw_{ds}/M_{ds})=850/17=50 \text{ Mbps};$$

$$B_{us}=ceil(ATTBw_{us}/M_{us})=250/5=50 \text{ Mbps}.$$

Again, the theoretical upper limit for each data symbol is calculated as:

$$Tbudget_{usmax}=Ceil(MAXNDR_{us}/B_{us})=ceil(125/50)=3;$$

$$Tbudget_{dsmax}=Ceil(MAXNDR_{ds}/B_{ds})=ceil(425/50)=9.$$

Then, the logical frame configuration is restored to the initial logical frame configuration of the current line. When the initial configuration uses data symbols for all symbols, skip this step.

Subsequently, the MAXNDR of the current line is restored to the initial MAXNDR, namely, $MAXNDR_{ds}=425$ Mbps, and $MAXNDR_{us}=125$ Mbps.

As shown in Figure 5, only 3 symbols are used for the uplink, 9 symbols for the downlink, thereby bearing a bandwidth for 425 Mbps in the downlink and 125 Mbps in the uplink, which can in turn achieve the bearing capacity equivalent to the existing technologies. The remaining symbols act as quiet symbols, to achieve energy saving.

Embodiment Three

An embodiment of the disclosure also provides a storage medium storing thereon a computer program, which is configured, when executed, to implement the method according to any of the embodiments described herein.

Optionally, the storage medium in the embodiment may be configured to store program codes for executing the following steps of the method described herein.

At step S1, a maximum bandwidth allocated for a current line is acquired.

At step S2, a number of data symbols required by the current line and a number of quiet symbols of the current line are determined according to the maximum bandwidth.

At step S3, the maximum bandwidth is borne by the determined number of data symbols required by the current line.

Optionally, the storage medium in the embodiment may include, but is not limited to, various mediums that can store program codes, such as a USB flash disk, a read-only memory (ROM), a random access memory (ROM), a mobile hard disk drive, a magnetic disk or an optical disk.

Optionally, for specific examples of the present embodiment, reference can be made to the examples described in above embodiments and the alternative embodiments, and the examples will not be repeated here.

Embodiment Four

An embodiment of the present disclosure also provides an electronic device that includes a memory and a processor. The memory stores thereon a computer program, and the processor is configured to execute the computer program to implement the following steps of the method described herein.

At step S1, a maximum bandwidth allocated for a current line is acquired.

At step S2, a number of data symbols required by the current line and a number of quiet symbols of the current line are determined according to the maximum bandwidth.

At step S3, the maximum bandwidth is borne by the determined number of data symbols required by the current line.

Obviously, those skilled in the art should appreciate that the described modules or steps of the present disclosure can be implemented by a general computing device, and they can be concentrated on a single computing device or distributed in a network composed of multiple computing devices. Optionally, they can be implemented by program codes executable by a computing device, in which case they can be stored in a storage device for execution by the computing device; and in some cases, the steps shown or described may be performed in an order different from the order described herein, or they may be respectively fabricated into integrated circuit modules, or multiple modules or steps of them may be achieved by being fabricated into a single integrated circuit module. In this way, the present disclosure is not limited to any specific combination of hardware and software.

**Claims**

1. A bandwidth bearing method, comprising:

   acquiring a maximum bandwidth allocated for a current line;
   determining a number of data symbols required by the current line and a number of quiet symbols of the current line according to the maximum bandwidth; and
   bearing the maximum bandwidth by the determined number of data symbols required by the current line.

2. The bandwidth bearing method according to claim 1, wherein the step of determining a number of data symbols required by the current line and a number of quiet symbols of the current line according to the maximum bandwidth further comprises: acquiring an average attainable bandwidth for each data symbol of the current line; and determining the number of data symbols required by the current line and the number of quiet symbols of the current line according to the average attainable bandwidth and the maximum bandwidth.

3. The bandwidth bearing method according to claim 2, wherein the step of acquiring an average attainable bandwidth for each data symbol of the current line further comprises: acquiring an available bandwidth for the current line and the number of data symbols allocated for the current line; using a result calculated by dividing the attainable bandwidths by the number of data symbols as the average attainable bandwidth.

4. The bandwidth bearing method according to claim 3, wherein the step of acquiring the number of data symbols allocated for the current line comprises: acquiring a logical frame configuration of the current line; and acquiring the number of data symbols allocated for the current line according to the logical frame configuration.

5. The bandwidth bearing method according to any one of claims 1 to 4, wherein the current line comprises a current line in an uplink direction and/or a current line in a downlink direction.

6. The bandwidth bearing method according to claim 1, further comprising:
   switching off a transmitter and a receiver in each of time slots for the determined number of quiet symbols of the current line, wherein the transmitter is positioned at a transmitting end of the current line, and the receiver is positioned at a receiving end of the current line.

7. A bandwidth bearing device, comprising:

   an acquisition module configured to acquire a maximum bandwidth allocated for a current line;
   a determination module configured to determine a number of data symbols required by the current line and a number of quiet symbols of the current line according to the maximum bandwidth; and
   a bearing module configured to bear the maximum bandwidth by the determined number of data symbols required by the current line.

8. The bandwidth bearing device according to claim 7, wherein the determination module is further configured to acquire an average attainable bandwidth for each data symbol of the current line, and to determine the number of data symbols required by the current line and the number of quiet symbols of the current line according to the average attainable bandwidth and the maximum bandwidth.

9. The bandwidth bearing device according to claim 8, wherein the determination module is further configured to acquire an available bandwidth for the current line and the number of data symbols allocated for the current line, and to use a result calculated by dividing the attainable bandwidths by the number of data symbols as the average attainable bandwidth.

10. The bandwidth bearing device according to claim 9, wherein the determination module is further configured to acquire a logical frame configuration of the current line, and to acquire the number of data symbols allocated for the current line according to the logical frame configuration.

11. The bandwidth bearing device according to any one of claims 7 to 10, wherein the current line comprises a current line in an uplink direction and/or a current line in a downlink direction.

12. The bandwidth bearing device according to claim 7, further comprising:
a switch module configured to switch off a transmitter and a receiver in each of time slots for the determined number of quiet symbols of the current line, wherein the transmitter is positioned at a transmitting end of the current line, and the receiver is positioned at a receiving end of the current line.

13. A storage medium, storing thereon a computer program, which is configured, when executed, to implement the bandwidth bearing method according to any one of claims 1 to 6.

14. An electronic device, comprising a memory and a processor, wherein the memory stores thereon a computer program, and the processor is configured to execute the computer program to implement the bandwidth bearing method according to any one of claims 1 to 6.

$M_{us}$ $M_{ds}$

▨ data

▨ quiet

▨ data

⊞ quiet

Figure 1

```
┌─────────────────────────────────────────────────────────┐
│                                                         │
│   Acquire a maximum bandwidth allocated for a current line │ ⟋ S202
│                                                         │
└─────────────────────────────────────────────────────────┘
                            │
                            ▼
┌─────────────────────────────────────────────────────────┐
│   Determine a number of data symbols required by the current line │
│       and a number of quiet symbols of the current line │ ⟋ S204
│              according to the maximum bandwidth         │
└─────────────────────────────────────────────────────────┘
                            │
                            ▼
┌─────────────────────────────────────────────────────────┐
│   Bear the maximum bandwidth by the determined number of data │
│          symbols required by the current line          │ ⟋ S206
│                                                         │
└─────────────────────────────────────────────────────────┘
```

Figure 2

Acquisition Module `— 30`

Determination Module `— 32`

Bearing Module `— 34`

Figure 3

| $M_{us}$ | $M_{ds}$ |

data

quiet

data

quiet

Figure 4

data

quiet

data

quiet

| $M_{us}$ | $M_{ds}$ |

Figure 5

## INTERNATIONAL SEARCH REPORT

| International application No. |
| --- |
| **PCT/CN2019/129058** |

| **A.** | **CLASSIFICATION OF SUBJECT MATTER** |
| --- | --- |

H04L 5/02(2006.01)i;  H04B 3/32(2006.01)i

According to International Patent Classification (IPC) or to both national classification and IPC

| **B.** | **FIELDS SEARCHED** |
| --- | --- |

Minimum documentation searched (classification system followed by classification symbols)

H04L; H04B

Documentation searched other than minimum documentation to the extent that such documents are included in the fields searched

Electronic data base consulted during the international search (name of data base and, where practicable, search terms used)

WPI; EPODOC; CNKI; IEEE; CNPAT: 线路, 链路, 带宽, 速率, 最大, 符号, 数量, 数目, 个数, G.fast, line, link, bandwidth, rate, max, symbol, number

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | WO 2017125922 A1 (SCKIPIO TECHNOLOGIES S.I LTD.) 27 July 2017 (2017-07-27) description, page 5, line 1 to page 13, line 3, page 22, line 12 to page 23, line 12 and page 28, line 12 to page 31, line 29, and figures 2 and 5-7 | 1-14 |
| A | CN 105009465 A (HUAWEI TECHNOLOGIES CO., LTD.) 28 October 2015 (2015-10-28) entire document | 1-14 |
| A | WO 2018166922 A1 (BRITISH TELECOMMUNICATIONS PUBLIC LIMITED COMPANY) 20 September 2018 (2018-09-20) entire document | 1-14 |
| A | ZHANG, Nan et al. "Dynamic Resource Allocation for Energy Efficient Transmission in Digital Subscriber Lines" *IEEE Transactions on Signal Processing*, Vol. 65, No. 16, 15 August 2017 (2017-08-15), entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 March 2020** | **27 March 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/129058**

| Patent document cited in search report | | | Publication date (day/month/year) | Patent family member(s) | | | Publication date (day/month/year) |
|---|---|---|---|---|---|---|---|
| WO | 2017125922 | A1 | 27 July 2017 | US | 2019207736 | A1 | 04 July 2019 |
| | | | | EP | 3430849 | A4 | 07 August 2019 |
| | | | | EP | 3430849 | A1 | 23 January 2019 |
| CN | 105009465 | A | 28 October 2015 | EP | 2954620 | A2 | 16 December 2015 |
| | | | | US | 2018054235 | A1 | 22 February 2018 |
| | | | | US | 9473339 | B2 | 18 October 2016 |
| | | | | EP | 3337047 | A1 | 20 June 2018 |
| | | | | US | 9935684 | B2 | 03 April 2018 |
| | | | | US | 2017041045 | A1 | 09 February 2017 |
| | | | | US | 2014307749 | A1 | 16 October 2014 |
| | | | | CN | 105009465 | B | 19 April 2017 |
| | | | | AU | 2014252545 | B2 | 22 December 2016 |
| | | | | EP | 3337047 | B1 | 17 July 2019 |
| | | | | RU | 2616968 | C1 | 19 April 2017 |
| | | | | EP | 2954620 | B1 | 30 May 2018 |
| | | | | US | 10382093 | B2 | 13 August 2019 |
| | | | | MX | 360089 | B | 17 October 2018 |
| | | | | MX | 2015014239 | A | 14 January 2016 |
| | | | | WO | 2014166432 | A2 | 16 October 2014 |
| | | | | AU | 2014252545 | A1 | 01 October 2015 |
| | | | | WO | 2014166432 | A3 | 04 December 2014 |
| | | | | EP | 2954620 | A4 | 02 March 2016 |
| | | | | EP | 3565131 | A1 | 06 November 2019 |
| WO | 2018166922 | A1 | 20 September 2018 | CN | 110402576 | A | 01 November 2019 |
| | | | | EP | 3596913 | A1 | 22 January 2020 |

Form PCT/ISA/210 (patent family annex) (January 2015)

**EP 3 905 582 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811616133